## Europäisches Patentamt
## European Patent Office
## Office européen des brevets

(11) Veröffentlichungsnummer: **0 253 047**
**A1**

(12) # EUROPÄISCHE PATENTANMELDUNG

(21) Anmeldenummer: **86890207.3**

(22) Anmeldetag: **14.07.86**

(51) Int. Cl.⁴ **B01D 13/00** , //B01D53/22

(43) Veröffentlichungstag der Anmeldung:
**20.01.88 Patentblatt 88/03**

(84) Benannte Vertragsstaaten:
**AT BE CH DE FR GB IT LI NL SE**

(71) Anmelder: **Vogelbusch Gesellschaft m.b.H.**
**Blechturmgasse 11**
**A-1050 Wien(AT)**

(72) Erfinder: **Spet, Gerhard, Dipl.-Ing.**
**Scariaweg 49**
**A-1160 Wien(AT)**

(74) Vertreter: **Wolfram, Gustav, Dipl.-Ing.**
**Schwindgasse 7 P.O. Box 205**
**A-1041 Wien(AT)**

(54) **Membrantrennelement.**

(57) Membrantrennelemente mit einer Membran und einem Öffnungen aufweisenden Membranträger kommen in Vorrichtungen zur Durchführung von Membrantrennverfahren, wie umgekehrte Osmose, Ultra-oder Mikrofiltration, Gastrennung und Perva-poration zum Einsatz.

Zwecks Erhöhung der Durchsatzleistung sowie insbesondere der Standzeit der Membranen ist bei einem Membrantrennelement zwischen Membran (2) und Membranträger (1) eine Fasermateriallage (3) vorgesehen.

FIG. 2

EP 0 253 047 A1

## Membrantrennelement

Die Erfindung betrifft ein Membrantrennelement mit einer Membran und einem Öffnungen aufweisenden Membranträger.

Solche Elemente gelangen in Vorrichtungen zur Durchführung von Membrantrennverfahren, wie umgekehrte Osmose, Ultra-oder Mikrofiltration, Gastrennung und Pervaporation zum Einsatz.

Bei diesen Verfahren werden die zu behandelnden Medien, nämlich Flüssigkeiten, Lösungen oder Dämpfe, unter Druck an der aktiven Beschichtung einer Membran vorbeigeführt.

Die Membranen bestehen in vielen Fällen im wesentlichen aus einer dünnen, vergleichsweise durchlässigen Trägerfolie, auf deren einer Seite die aktive Beschichtung aufgebracht ist (sogenannte asymmetrische Membran). Als aktive Beschichtungen sind eine große Zahl von Polymeren, wie Cellulosederivate, beispielsweise Celluloseacetat, verschiedenste Polyamide, Polysulfone und auch anorganische Materialien, wie Graphitoxid und Zirkonhydroxid bekannt.

Die aktive Beschichtung weist im allgemeinen eine Stärke von lediglich einigen $10^{-3}$ bis $10^{-1}$ mm auf.

Bestimmte Komponenten der an der aktiven Beschichtung vorbeigeführten Medien treten als sogenanntes Permeat bevorzugt durch die Membran.

Die Membranen sind aufgrund des oft beträchtlichen Unterschiedes der an ihren beiden Seiten herrschenden Drücke hoher mechanischer Belastung ausgesetzt und müssen durch einen Träger am Zerreißen oder Platzen gehindert werden. Als solche Träger sind poröse Platten, Gitter oder gelochte Platten, wie Lochbleche, im Gebrauch. Während der Durchführung der Trennverfahren wird die Membran gegen den Membranträger gepreßt.

Alle diese Träger haben jedoch Nachteile, wie zum Beispiel saugseitige Druckverluste, aufwendige Rahmenkonstruktionen oder - im Falle der Verwendung von gelochten Platten als Träger - Nichtwirksamwerden von Membranflächen, welche auf den zwischen den Öffnungen der Platte befindlichen Stegen aufliegen. Unter Berücksichtigung aller Vor-und Nachteile der verschiedenen Membranträger erwies sich eine eng gelochte Platte bzw. ein solches Blech immer noch als die technisch einfachste und in der Praxis brauchbarste Lösung; der Nachteil der teilweise nicht wirksam werdenden Membranfläche mußte in Kauf genommen werden.

Bei einem mit Öffnungen versehenen Membranträger, wie eben einem Lochblech, besteht jedoch darüber hinaus die Gefahr, daß sich entlang der Ränder der Öffnungen Knickstellen und in der Folge Risse in der Membran bilden, was zur Unbrauchbarkeit der Membran führt. Ein Austausch von Membranen führt zusätzlich noch zu längeren Betriebsstillständen, bedingt durch den meist relativ aufwendigen Ausbau der Membrantrennelemente aus den entsprechenden Vorrichtungen.

Die Erfindung stellt sich die Aufgabe, die dargelegten Unzukömmlichkeiten bei bekannten Membrantrennelementen zu überwinden und die Durchsatzleistung sowie insbesondere die Standzeit der Membranen zu erhöhen.

Diese Aufgabe wird bei einem Trennelement der eingangs definierten Art erfindungsgemäß dadurch gelöst, daß zwischen Membran und Membranträger eine Fasermateriallage vorgesehen ist.

Durch diese Fasermateriallage wird einerseits verhindert, daß die Membran unter Druck gegen die Stegflächen zwischen den Öffnungen des Trägers gepreßt wird. Die Leistung der Membran wird somit gesteigert, da die feinen Hohlräume und Kanäle der Fasermateriallage dränierend wirken und durch die Membran dringende Flüssigkeits-oder Dampfströme von jeder Stelle der Membran zuverlässig zu den im Träger vorhandenen Öffnungen ableiten.

Die Standzeit der Membranen wird zusätzlich ganz entscheidend erhöht, da die Membranen auch über den Öffnungen des Trägers abgestützt werden.

Die Stärke der Fasermateriallage kann im allgemeinen zwischen etwa 0,01 und etwa 1 mm betragen.

Zweckmäßig ist eine gelochte Platte als Membranträger vorgesehen.

Die gelochte Platte kann aus einem geeigneten, gegenüber den eingesetzten Medien inerten Metall, beispielsweise Edelstahl, Aluminium oder einem Sondermetall, aus einem keramischen Material oder Kunststoff gefertigt sein.

Im allgemeinen weisen die Öffnungen der gelochten Platte aus Gründen der einfachen Fertigung kreisrunde Form auf, es ist jedoch jede beliebige Lochform möglich.

Die Lochdichte der für erfindungsgemäße Membrantrennelemente eingesetzten gelochten Platten kann gegenüber einem bisher verwendeten Element sogar verringert werden, was wirtschaftliche Vorteile und Verbesserungen hinsichtlich der Stabilität der Membranträger bedeutet.

Vorteilhaft ist ein Gewebe, Gewirk oder Vlies aus anorganischen oder organischen Fasern als Fasermateriallage eingefügt.

Sowohl natürliche Fasern als auch Kunststoffasern kommen als organisches Ausgangsmaterial für die Fasermateriallage in Frage.

Nach einer bevorzugten Ausführungsform ist die Fasermateriallage aus Kunststoffasern aufgebaut.

In der Praxis haben sich beispielsweise Gewebe, Gewirke, Wirrfaser-oder gelegte Vliese aus Polyalkylenen, wie Polyäthylen und Polypropylen, weiters aus PVC und PTFE als geeignet erwiesen.

Nach einer weiteren zweckmäßigen Ausführungsform ist die Fasermateriallage aus Glasfasern aufgebaut.

Durchaus bewährt haben sich für manche Anwendungsfälle auch aus $Al_2O_3$-Fasern gefertigte Flachmaterialien, welche als sogenannte Keramikpapiere bekannt sind.

Die Erfindung wird im folgenden anhand einer Zeichnung noch näher erläutert.

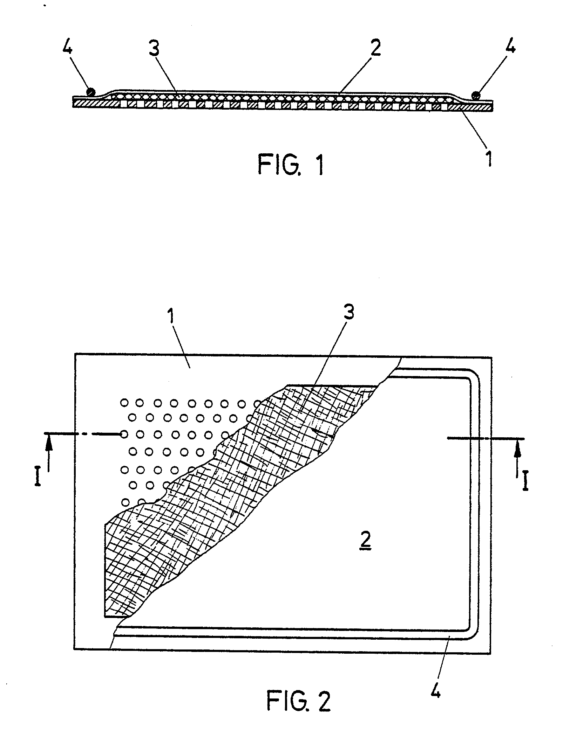

In Fig. 1 ist ein schematischer, überhöhter Querschnitt durch ein erfindungsgemäßes Membrantrennelement und in Fig. 2 eine teilweise aufgerissene Draufsicht auf ein solches Element gezeigt.

Das Element weist nach dem dargestellten Ausführungsbeispiel rechteckige Form auf, der Membranträger 1 ist als Lochblech mit kreisrunden Öffnungen ausgebildet. Zwischen dem Membranträger 1 und der Membran 2 ist eine Fasermateriallage 3 angeordnet. Im Umfangsbereich des Trägers 1 sind keine Öffnungen vorgesehen; die Membran 2 wird mittels einer Dichtung 4 in diesem Bereich an den Träger 1 gepreßt. Die Fasermateriallage erstreckt sich dabei nicht bis zum Rand des Trägers 1, sondern endet knapp vor der auf die beschriebene Weise ausgebildeten Dichtleiste, wie insbesondere aus Fig. 1 gut ersichtlich ist, welche einen Schnitt des in Fig. 2 veranschaulichten Elementes entlang der Linie I-I zeigt.

## Ansprüche

1. Membrantrennelement mit einer Membran (2) und einem Öffnungen aufweisenden Membranträger (1), dadurch gekennzeichnet, daß zwischen Membran (2) und Membranträger (1) eine Fasermateriallage (3) vorgesehen ist.

2. Membrantrennelement nach Anspruch 1, dadurch gekennzeichnet, daß eine gelochte Platte (1) als Membranträger vorgesehen ist.

3. Membrantrennelement nach einem der Ansprüche 1 oder 2, dadurch gekennzeichnet, daß ein Gewebe, Gewirk oder Vlies aus anorganischen oder organischen Fasern als Fasermateriallage (3) eingefügt ist.

4. Membrantrennelement nach Anspruch 3, dadurch gekennzeichnet, daß die Fasermateriallage (3) aus Kunststoffasern aufgebaut ist.

5. Membrantrennelement nach Anspruch 3, dadurch gekennzeichnet, daß die Fasermateriallage (3) aus Glasfasern aufgebaut ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 456 334 (G. MALFITANO)<br>* Insgesamt * | 1-3 | B 01 D 13/00 //<br>B 01 D 53/22 |
| Y | | 5 | |
| | --- | | |
| X | FR-A-2 372 922 (C. FREUDENBERG)<br>* Seite 1, Zeilen 4-18; Ansprüche 1-3,6,7 * | 1-4 | |
| | --- | | |
| X | DE-A-1 910 541 (F. ZIMMERMANN)<br>* Figur 2; Anspruch 3; Seite 2, Zeilen 9-25 * | 1-3 | |
| | --- | | |
| X | US-A-3 415 038 (GULF GEN. ATOMIC INC.)<br>* Figuren 2;3; Anspruch · 12; Spalte 8, Zeile 57 - Spalte 9, Zeile 11 * | 1-3 | **RECHERCHIERTE SACHGEBIETE (Int. Cl.4)**<br><br>B 01 D |
| | --- | | |
| X | FR-A-2 236 538 (RHONE-POULENC)<br>* Figuren 1,2; Seite 3, Zeile 27 - Seite 4, Zeile 10; Seite 9, Zeilen 6-10 * | 1-4 | |
| | --- | | |
| Y | US-A-3 401 798 (DORR-OLIVER INC.)<br>* Spalte 2, Zeilen 13-24 * | 5 | |
| | ----- | | |

Der vorliegende Recherchenbericht wurde für alle Patentansprüche erstellt.

| Recherchenort<br>DEN HAAG | Abschlußdatum der Recherche<br>10-04-1987 | Prüfer<br>HOORNAERT P.G.R.J. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82